# EUROPÄISCHE PATENTANMELDUNG

(11) **EP 3 275 306 A1**
(43) Veröffentlichungstag der Anmeldung: **31.01.2018**
(21) Anmeldenummer: 17160646.0
(22) Anmeldetag: 13.03.2017
(51) Int. Cl.: A01G 7/04

(54) **LED-LEUCHTE FÜR PFLANZEN**

(30) Priorität: 28.07.2016 CH 9842016
(71) Anmelder: Quazhar Lightning Company AG, 5436 Würenlos (CH)
(72) Erfinder: Alraun, Markus, 5313 Klingnau (CH); Flück, Daniel, 8953 Dietikon (CH); Nadstazik, Peter, 5436 Würenlos (CH)
(74) Vertreter: Spierenburg, Pieter

(57) **Zusammenfassung**

Eine LED-Leuchte (L) zur Förderung von Pflanzenwachstum weist eine Vielzahl von auf einer Platine (1) angeordnete LEDs (2) auf, die im sichtbaren Bereich abstrahlen. Sie weist mehrere rückseitig der Platine (1) angeordnete Spiegel (7,8) auf, die von der Rückseite (1 b) der Platine (1) und von einem Aluminiumkörper (4) abgegebene Infrarotstrahlung (IR) umlenkt und in den Richtungsbereich der sichtbaren LED-Strahlung (VR) richtet. Die Flächen (5, 6) des Aluminiumkörpers (4) erstrecken sich von der Rückseite (1a) der Platine (1) weg und sind bezüglich der Platine (1) symmetrisch zueinander angeordnet und sind jeweils der Rückseite (1 b) der Platine (1) in einem Winkel zugeneigt. Die zwei Spiegel (7, 8) sind so angeordnet, dass sie den Flächen (5, 6) des Alukörpers (4) zugeneigt sind. Die LED-Leuchte (L) weist eine erhöhte Gesamtleistung auf, indem die Wärmestrahlung nutzbringend zu den Pflanzen geführt wird.

## Beschreibung

### Technisches Gebiet

Die Erfindung betrifft eine LED-Leuchte zur Anregung des Pflanzenwachstums.

### Stand der Technik

LED-Leuchten sind heute zur Anregung des Pflanzenwachstums in Gebrauch, wie zum Beispiel als Grossanlagen in Gewächshäusern für Gemüse und Blumen sowie auch für einzelne Pflanzen in einem Wohnraum. Um ein Pflanzenwachstum, das heisst die Photosynthese und das Wachstum von Blättern und Blüten optimal zu fördern werden LEDs eingesetzt, die im roten sowie blauen Bereich des sichtbaren Spektrums abstrahlen, also um den Wellenlängenbereich um 450 bzw. 660 nm. Zudem werden auch zusätzlich weisse LEDs eingesetzt, um das restliche sichtbare Spektrum abzudecken.

Obwohl LEDs an sich im Vergleich zu früheren Leuchtsystemen als energie-effizient gelten, ist dennoch insbesondere für Grossanlagen der Energieverbrauch ein ausschlaggebender Faktor für die Wirtschaftlichkeit eines Gewächshauses. Hieraus ist der vorliegenden Erfindung die Aufgabe gestellt, eine LED-Leuchte zu schaffen, deren Leistungseffizienz im Vergleich zu LED-Leuchten des Standes der Technik verbessert ist.

### Beschreibung der Erfindung

Die gestellte Aufgabe wird durch eine LED-Leuchte nach Anspruch 1 gelöst.

Eine LED-Leuchte für die Förderung von Pflanzenwachstum weist eine Vielzahl von LEDs und eine Stromversorgung für den Betrieb der LEDs auf, , wobei ihre sichtbare LED-Strahlung von der Vorderseite der Platine weg in einen Richtungsbereich abstrahlt. Eine ist in einem Bereich rückseitig der Platine angeordnet.

Gemäss der Erfindung weist die LED-Leuchte einen Aluminiumkörper auf, mit dem die Platine verbunden ist sowie erste Spiegel auf, die rückseitig der Platine angeordnet sind, wobei die Spiegel so dimensioniert und ausgerichtet sind, dass von der Rückseite der Platine und vom Aluminiumkörper abgegebene Infrarotstrahlung in einen Richtungsbereich umgelenkt wird, der mit dem Richtungsbereich der sichtbaren Strahlung der LEDs zusammenfällt.

Infrarotstrahlung wird sowohl von der Platine als auch vom Aluminiumkörper, der durch die physische Verbindung mit der Platine Wärme aufnimmt, abgegeben. Die Infrarotstrahlung die von der Platine und dem Aluminiumkörper abstrahlt, wird von den ersten Spiegeln abgelenkt, sodass sie im Wesentlichen in eine Richtung parallel zur Platine und in die Richtung der sichtbaren Strahlung nach vorne gerichtet wird.

Die erfindungsgemässe LED-Leuchte bewirkt nicht nur eine Förderung des Pflanzenwachstums aufgrund der sichtbaren LED-Strahlung im roten und blauen sichtbaren Wellenlängenbereich sondern zugleich auch eine Wärmestrahlung aufgrund der umgelenkten Infrarotstrahlung. Die Infrarotstrahlung, die von der Rückseite der Platine abstrahlt und ohne Spiegelsystem die Pflanzen nicht direkt erreichen würde, wird nun durch das erfindungsgemässe Spiegelsystem nach vorne in die Richtung der Pflanzen gerichtet. Die Gesamtleistung der LED-Leuchte ist durch die gezielte und nutzbringende Ausrichtung der Infrarotstrahlung erhöht. Spezifisch beträgt die Leistung einer LED in Form der Infrarotstrahlung etwa 40% der Gesamtleistung, währen 60% der Gesamtleistung in Form von sichtbarer Strahlung abgegeben wird. Durch die Umlenkung der Infrarotstrahlung wird also ein beträchtlicher Leistungsanteil nutzbringend eingesetzt. Die Wirtschaftlichkeit eines Gewächshauses mit der erfindungsgemässen LED-Leuchte kann somit erhöht werden, indem der Heizaufwand entsprechend verringert werden kann.

In einer Ausführung sind die ersten Spiegel paarweise und bezüglich der Mitte der Platine symmetrisch zueinander und jeweils in einem Winkel zur Platine angeordnet. Dies ist insbesondere für die mechanischen Ausführung der Leuchte vorteilhaft.

In einer weiteren Ausführung weist der Aluminiumkörper zwei Flächen auf, die sich von der Mitte der Rückseite der Platine weg erstrecken und bezüglich der Platine symmetrisch zueinander angeordnet und jeweils der Rückseite der Platine in einem Winkel zugeneigt sind. Durch diese Anordnung wird die Umlenkung der Infrarotstrahlung insbesondere optimiert.

In einer weiteren Ausführung weisen die beiden Flächen des Aluminiumkörpers zweite Spiegel auf. Dabei sind Flächen der ersten Spiegel so angeordnet, dass ihre Spiegelflächen den Spiegelflächen der zweiten Spiegel zugeneigt sind. Dadurch wird Infrarotstrahlung, die von der Rückseite der Platine direkt nach hinten strahlt, von den zweiten Spiegeln zu den ersten Spiegeln gelenkt. Die ersten Spiegel lenken die Infrarotstrahlung in eine Richtung im Wesentlichen im rechten Winkel zur Vorderseite der Platine nach vorne. Sie strahlt somit schliesslich nach vorne und in die gleiche Richtung wie die sichtbare Strahlung der LEDs. Dadurch gelangt die Infrarotstrahlung, die von der Rückseite der Platine in einem Winkelbereich um die Senkrechte der Rückseite abstrahlt, nach zweimaliger Spiegelung nach vorne und in einen Winkelbereich um die Senkrechte zur Vorderseite der Platine und so in den gleichen Richtungsbereich wie die sichtbare Strahlung der LEDs. Dies erwirkt eine weitere Optimierung der Umlenkung der Infrarotstrahlung und Energieeffizienz der LED-Leuchte.

In einer Ausführung der Erfindung weisen die Spiegel Spiegelflächen mit Aluminium auf. Aluminium reflektiert Infrarotstrahlung in einem breiten Infrarotbereich, jedoch insbesondere im Wellenlängenbereich von 650 bis 900 nm. Dies ist der Wellenlängenbereich der Infrarotstrahlung von der Platine, die dem Pflanzenwachstum besonders förderlich ist.

In einer weiteren besonderen Ausführung der Erfindung weisen die Spiegel Spiegelflächen mit Aluminium sowie mit einer Dünnschicht zur weiteren Erhöhung der Reflektivität in Bereich von 650 bis 900 nm auf.

In einer Ausführung der Erfindung ist das Gehäuse der Stromversorgung der LED-Leuchte rückseitig der Platine an dem Aluminiumkörper angeordnet, wobei die Stromversorgung an einem Steg, an dem die Spiegel und der Aluminiumkörper befestigt sind, angeordnet ist.

In einer Ausführung der Erfindung sind die ersten zwei Spiegel in einem Winkel zur Platine angeordnet. Je nach geometrischer Ausgestaltung und Dimensionierung der Platine und des Aluminiumkörpers kann dieser Winkel entsprechend angepasst werden, um die Umlenkung der Infrarotstrahlung nach vorne zu optimieren.

In einer beispielhaften Ausführung der Erfindung sind die Flächen des Aluminiumkörpers in einem Winkel von ca. 45° zur Platine angeordnet, wobei die ersten Spiegel den Flächen des Aluminiumkörpers in einem Winkel von beispielsweise 90° zugeneigt sind. Je nach Dimensionierung der Platine und dessen Gehäuses können diese Winkel angepasst werden, um die Umlenkung der Strahlung nach vorne zu erwirken.

In einer weiteren besonderen Ausführung der Erfindung weisen die Spiegel Spiegelflächen mit Silber auf.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispiels näher erläutert wird. Es zeigt:

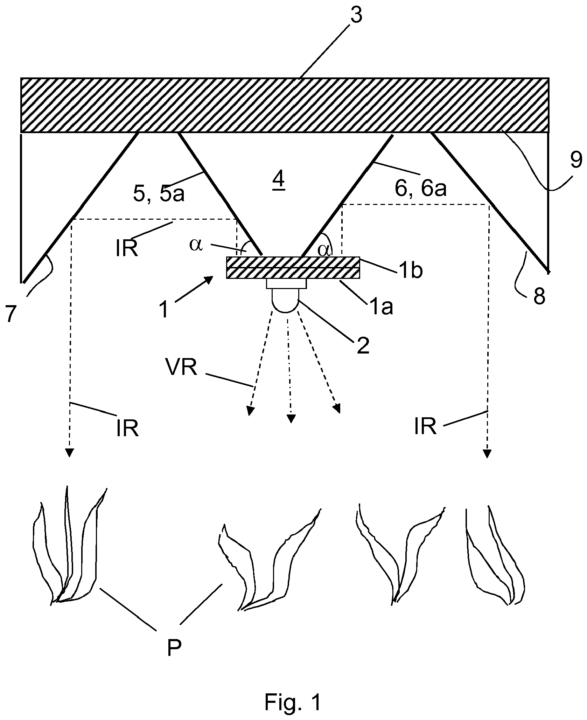

- Fig. 1: einen Querschnitt einer erfindungsgemässen LED-Leuchte mit LEDs auf einer Platine und rückseitig angeordneten Spiegeln.

### Ausführungsbeispiele der Erfindung

Die erfindungsgemässe LED-Leuchte weist eine Vielzahl von LEDs auf, die beispielsweise in einer Reihe auf einer länglichen Platine angeordnet sind, wobei die dazugehörigen Spiegelflächen und Flächen des Aluminiumkörpers ebenfalls in langen Rechteckformen realisiert sind, die parallel zur LED-Reihe ausgerichtet sind. In der Figur 1 ist ein solches Beispiel im Querschnitt schematisch dargestellt.
Dort ist eine LED-Leuchte L mit einer Platine 1 gezeigt, auf deren Vorderseite 1a eine LED 2 angeordnet ist. Die LED 2 wird von einer Stromversorgung 3 betrieben. Die sichtbare Abstrahlung VR der LED 2 ist schematisch und beispielhaft durch die gestrichelten Linien in einem Winkelbereich von der Vorderseite der Platine dargestellt. Diese Strahlung ist im sichtbaren Wellenlängenbereich, vorzugsweise insbesondere im roten sowie blauen Bereich, insbesondere im Bereich um 450 nm und 660 nm, der für das Pflanzenwachstum erfahrungsgemäss vorteilhaft ist. Das Gehäuse der Platine 1 bildet die Rückseite 1b der Platine und besteht beispielsweise aus Aluminium. Der Aluminiumkörper 4 ist in Verbindung mit der Platine und nimmt die Wärme der Platine auf und strahlt entsprechend Infrarotstrahlung ab. Rückseitig der Platine 1 sind zwei Spiegel 7,8 angeordnet, die paarweise symmetrisch zur Platine angeordnet sind und zur Umlenkung der Wärmestrahlung IR dient, die von der Rückseite 1b der Platine und von dem symmetrisch ausgestalteten Aluminiumkörper 4 mit Flächen 5, 6 ausgeht, so dass diese Wärmestrahlung zur Vorderseite der Platine hin in die gleiche Richtung wie die sichtbare Strahlung der LED gerichtet wird. Die zwei ersten Flächen des Aluminiumkörpers 5 und 6 sind direkt an der Rückseite der Platine 1b angeordnet, wobei sie beide bezüglich der Mitte der Platine 1 symmetrisch zueinander angeordnet sind. Ihre Flächen 5 und 6 sind je in einem Winkel α zur Rückseite 1 b der Platine 1 zugeneigt. Die Flächen 5, 6 Flächen des Aluminiumkörpers können beispielsweise von schwarzer Farbe sein. Die Wärmestrahlung IR von diesen Flächen wird von den Spiegeln 7, 8 nach vorne in die Richtung der sichtbaren Strahlung VR umgelenkt. Die Flächen 5, 6 des Aluminiumkörpers 4 können auch je eine Spiegelfläche aufweisen, wodurch die Wärmestrahlung IR von der Platine 1 in die Richtung der sichtbaren Strahlung VR umlenken, wie es mit gestrichelten Linien angedeutet ist. Die zwei Spiegel 7 und 8 sind ebenfalls bezüglich der Platine 1 symmetrisch zueinander angeordnet. Ihre Spiegelflächen 7 und 8 sind in einem Winkel zu den ersten zwei Spiegelflächen 5 bzw. 6 zugeneigt. Durch diese Spiegel 7 und 8 wird die Infrarotstrahlung nach vorne und in eine Richtung senkrecht zur Vorderseite der Platine 1 umgelenkt, sodass sie mit der Richtung der sichtbaren LED-Strahlung zusammenfällt. So wird die Wärmestrahlung gleichsam wie die sichtbare Strahlung auf die Pflanzen P gerichtet.

Die gestrichelt eingezeichneten Strahlungspfade sind als beispielhafte Strahlungspfade zu sehen. Sowohl die LED 2 als auch die Platinenrückseite 1 b strahlen in einem Winkelkegel ab, die jeweils um die eingezeichneten Strahlungspfade als optische Achse liegen.

Die Spiegel 7, 8 sind an einem Steg 9 befestigt, der aus Metall gefertigt ist. Die Stromversorgung 3 ist in dem gezeigten Beispiel rückseitig der Platine 1 angeordnet, wobei sie an dem Steg 9 für die Spiegel 7, 8 befestigt ist.

Zweckmässigerweise ist die LED-Leuchte mit einer grossen Länge, beispielsweise 1 Meter und einer Vielzahl von in einer Reihe angeordneten LEDs realisiert, wobei die Spiegel und Flächen des Aluminiumkörpers als längliche Rechteckformen in gegebenen Winkeln zur Platine ähnlich einem Hausdach angeordnet sind. Bei einem Einsatz in einer Grossanlage zum Beispiel einem Gewächshaus, werden die LED-Leuchten in einer oder mehreren Reihen über Pflanztrögen angebracht.

### Bezugszeichenliste

- 1: Platine
- 1a: Vorderseite Platine
- 1b: Rückseite Platine
- 2: LED
- 3: Stromversorgung
- 4: Aluminiumgehäuse
- 5: Fläche des Gehäuses,
- 5a: Spiegelfläche
- 6: Fläche des Gehäuses
- 6a: Spiegelfläche
- 7: Spiegel
- 8: Spiegel
- 9: -
- 10: -
- L: LED-Leuchte
- P: Pflanzen

## Patentansprüche

1. Eine LED-Leuchte (L) für die Förderung von Pflanzenwachstum weist eine Vielzahl von LEDs (2) auf, die auf einer Platine (1) angeordnet sind, wobei die sichtbare Strahlung (VR) der LED (2) von der Vorderseite (1a) der Platine (1) weg in einen Richtungsbereich abstrahlt und die LED-Leuchte (L) eine Stromversorgung (3) für den Betrieb der LEDs (2) aufweist,
**dadurch gekennzeichnet, dass**
die LED-Leuchte (L) einen mit der Platine (1) verbundenen Aluminiumkörper (4) und erste Spiegel (7, 8) aufweist, die rückseitig der Platine (1) angeordnet sind, wobei die Spiegel (7, 8) so dimensioniert und ausgerichtet sind, dass von der Rückseite der Platine (1) und vom Aluminiumkörper (4) abgegebene Infrarotstrahlung (IR) in einen Richtungsbereich umgelenkt wird, der mit dem Richtungsbereich der sichtbaren Strahlung (VR) der LEDs (2) zusammenfällt.

2. LED-Leuchte (L) nach Anspruch 1
**dadurch gekennzeichnet, dass**
die ersten Spiegel (7, 8) paarweise und bezüglich der Mitte der Platine (1) symmetrisch zueinander und jeweils in einem Winkel zur Platine (1) angeordnet sind.

3. LED-Leuchte (L) nach Anspruch 2
**dadurch gekennzeichnet, dass**
der Aluminiumkörper (4) zwei Flächen (5, 6) aufweist, die sich von der Mitte der Rückseite der Platine (1) weg erstrecken und bezüglich der Mitte der Platine (1) symmetrisch zueinander angeordnet und jeweils der Rückseite der Platine (1) in einem Winkel zugeneigt sind.

4. LED-Leuchte (L) nach Anspruch 3
**dadurch gekennzeichnet, dass**
die beiden Flächen (5, 6) des Aluminiumkörpers (4) zweite Spiegel (5a, 6a) aufweisen und die Flächen der ersten Spiegel (7, 8) den zweiten Spiegeln (5a, 6a) zugeneigt sind.

5. LED-Leuchte (L) nach einem der Ansprüche 1-4
**dadurch gekennzeichnet, dass**
die Spiegel (5a, 6a, 7, 8) Spiegelflächen mit Aluminium aufweisen.

6. LED-Leuchte (L) nach Anspruch 5
**dadurch gekennzeichnet, dass**
die Spiegel (5a, 6a, 7, 8) Spiegelflächen mit Aluminium und einer Dünnschicht zur Erhöhung der Reflektivität in Bereich von 650 bis 900 nm aufweisen.

7. LED-Leuchte (L) nach einem der vorangehenden Ansprüche
**dadurch gekennzeichnet, dass**
das Gehäuse der Stromversorgung (3) der LED-Leuchte (L) rückseitig der Platine (1) angeordnet ist und die Stromversorgung an einem Steg zur Befestigung der ersten Spiegel (7, 8) angeordnet ist.

8. LED-Leuchte (L) nach Anspruch 5
**dadurch gekennzeichnet, dass**
die Flächen (5, 6) des Aluminiumkörpers (4) in einem Winkel von ca. 45° zur Platine (1) angeordnet sind.

9. LED-Leuchte (L) nach einem der vorangehenden Ansprüche
**dadurch gekennzeichnet, dass**
die Spiegel (5a, 6a, 7, 8) Spiegelflächen mit Silber aufweisen.
